# EUROPÄISCHE PATENTSCHRIFT

(11) **EP 4 052 946 B1**
(45) Veröffentlichungstag und Bekanntmachung des Hinweises auf die Patenterteilung: **01.05.2024**
(21) Anmeldenummer: 21160925.0
(22) Anmeldetag: 05.03.2021
(51) Int. Cl.: B60K 15/03

(54) **KUNSTSTOFFTANK**
PLASTIC TANK
RÉSERVOIR EN MATIÈRE PLASTIQUE

(43) Veröffentlichungstag der Anmeldung: 07.09.2022
(73) Patentinhaber: Magna Energy Storage Systems GesmbH, 8261 Sinabelkirchen (AT)
(72) Erfinder: PUCHLEITNER, Rainer, 8052 Graz (AT); BAUER, Manuel, 8010 Graz (AT); STIENDL, Gregor, 8181 St. Ruprecht (AT); HUMENBERGER, Harald, 8181 St. Ruprecht (AT)
(74) Vertreter: Zangger, Bernd

(56) Entgegenhaltungen:
- DE-A1-102010 032 931
- DE-A1-102011 105 706
- US-A1- 2002 096 522
- US-A1- 2020 276 900

## Beschreibung

### Gebiet der Erfindung

Die vorliegende Erfindung betrifft einen Kunststofftank für ein Kraftfahrzeug.

### Stand der Technik

Es ist heute bekannt Tanks für Kraftfahrzeuge, beispielsweise Kraftstofftanks, aus Kunststoff herzustellen. Solche Kunststofftanks können insbesondere durch Thermoformen oder Blasformen hergestellt werden.

Die Kunststofftanks können Öffnungen aufweisen, die mit einem Deckel verschließbar sind. Insbesondere können Kunststofftanks eine Serviceöffnung aufweisen, so dass das Innere des Tankbehälters auch nach der Herstellung des Kunststofftanks zugänglich bleibt.

Am Rand einer derartigen Öffnung, insbesondere Serviceöffnung, kann ein Metallring angeordnet sein, um dem Kunststoffbehälter die nötige Steifigkeit zu verleihen, um die erforderlichen Schließkräfte beim Anbringen des Deckels zum Verschließen der Öffnung aufzunehmen.

Derartige Metallringe an Öffnungen von Kunststofftanks müssen jedoch üblicherweise geerdet werden, da sie sich elektrostatisch aufladen können. Auch neigen solche Metallringe dazu bei hohem Druck und hohen Temperaturen relativ leicht vom Tank "gezogen" zu werden. Daher müssen weitere Anbauteile verwendet werden, um einen solchen Metallring abzusichern. Die Herstellung der Tanks wird dadurch insgesamt aufwändig und teuer.

Aus der US 2020/276900 A1 ist ein aus Harz hergestellter Tank bekannt, umfassend: eine Sperrschicht, die auf einer inneren Oberfläche eines aus Harz hergestellten Tankkörpers vorgesehen ist, wobei ein Öffnungsteil in der Sperrschicht vorgesehen ist, ein dicker Teil, der in Richtung einer Innenseite oder einer Außenseite des Tankkörpers vorsteht, in einer Harzschicht an einem äußeren Umfangsteil des Öffnungsteils vorgesehen ist, und die Sperrschichtschicht und ein Gießflanschteil an einer Basis eines rohrförmigen Öleinfüllöffnungsteils mit dem Harz des Tankkörpers in einem Zustand geformt sind, in dem der Gießflanschteil an dem dicken Teil angeordnet ist, und eine Endkante des Öffnungsteils in der Sperrschicht eine zylindrische Form oder eine konische Form mit einem mit einer Krümmung gebogenen Abschnitt aufweist und ein distales Ende innerhalb einer in dem Gussflanschteil ausgebildeten vertieften Nut angeordnet ist.

Die DE 10 2010 032931 A1 offenbart einen Behälter aus thermoplastischem Kunststoff mit wenigstens einem im Inneren des Behälters vorgesehenen Einbauteil, welches durch eine Öffnung in einer Behälterwandung in den Behälter eingesetzt ist und gegen einen im Bereich der Öffnung vorgesehenen umlaufenden Flansch abgedichtet ist, wobei der Flansch einstückig mit der Behälterwandung ausgebildet ist und der Flansch auf der Außenseite des Behälters zumindest teilweise untergreifbar und/oder umgreifbar ausgebildet ist.

### Zusammenfassung der Erfindung

Es ist eine Aufgabe der Erfindung, einen Kunststofftank für ein Kraftfahrzeug anzugeben, der ein zuverlässiges Öffnen und Schließen einer Öffnung, insbesondere einer Serviceöffnung, des Tanks ermöglicht und dabei einfach und kostengünstig hergestellt werden kann.

Die Lösung der Aufgabe erfolgt durch einen Kunststofftank für ein Kraftfahrzeug mit den Merkmalen gemäß Anspruch 1.

Der Kunststofftank umfasst eine Behälterwand aus Kunststoff, wobei in der Behälterwand eine Öffnung angeordnet ist, wobei der Kunststofftank einen abnehmbaren Deckel umfasst und die Öffnung durch den Deckel verschließbar und öffenbar ist, wobei in den die Öffnung umgebenden Rand der Behälterwand ein Versteifungsring eingebettet ist, wobei der Versteifungsring ein Kunststoff-Spritzgussbauteil ist, wobei der Deckel beim Verschließen der Öffnung unmittelbar oder mittelbar durch den Versteifungsring abgestützt ist.

Erfindungsgemäß weist der Versteifungsring Versteifungsgeometrien auf, nämlich Versteifungswaben und/oder Versteifungsrippen, um die Steifigkeit des Bauteils zu erhöhen.

Erfindungsgemäß wird ein Versteifungsring aus Kunststoff verwendet, um die erforderliche Steifigkeit für das Anbringen des Deckels zur Verfügung zu stellen, also den Deckel mittelbar oder unmittelbar abzustützen. Der Versteifungsring ist in den Kunststoff der Behälterwand eingebettet, also zumindest abschnittsweise formschlüssig vom Kunststoff des Behälters umgeben, so dass der Versteifungsring sicher im Kunststoff der Behälterwand gehalten ist. Der Versteifungsring ist ein Spritzgussbauteil, so dass der Versteifungsring auf einfache Weise mit einer Geometrie ausgebildet werden kann, die eine hohe Steifigkeit und wahlweise Zusatzfunktionen des Versteifungsrings sicherstellt.

Durch die Verwendung eines Kunststoff-Spritzgussbauteils kann auf eine Erdung des Versteifungsrings verzichtet werden. Die Einbettung in den umgebenden Kunststoff reduziert auch den Aufwand und Bauteilbedarf, um den Versteifungsring auch bei höherem Druck und Temperatur im Tank sicher zu halten.

Erfindungsgemäß ist ein Bajonettring oder Gewindering, zum Verschlie-βen und Abnehmen des Deckels, vom Versteifungsring gehalten.

Der Versteifungsring ist vorzugsweise außen am Rand der Öffnung in die Behälterwand eingebettet, also an der Außenseite des Behälters.

Bevorzugt wird zumindest ein Abschnitt des Versteifungsrings beim Formungsprozess der Behälterwand, also bei der Herstellung des Tankbehälters, umblasen oder umsaugt, so dass der Versteifungsring in den Kunststoff der Behälterwand eingebettet wird. Bevorzugt wird der ganze Umfang des Versteifungsrings umblasen oder umsaugt und/oder in den Kunststoff der Behälterwand eingebettet.

Bevorzugt ist zumindest ein Abschnitt des Versteifungsrings mittels eines Schweißpads am Kunststoff der Behälterwand befestigt, wobei besonders bevorzugt das Schweißpad im Kunststoff der Behälterwand fixiert ist. Vorzugsweise ist der Versteifungsring zwischen einer Fläche des Schweißpads und dem Kunststoff der Behälterwand geklemmt.

Der Bajonettring ist bevorzugt ein Kunststoffbauteil. Auf die Erdung des Bajonettringes kann dann vorzugsweise ebenfalls verzichtet werden.

Ein umlaufendes Dichtelement, insbesondere eine Ringdichtung, ist bevorzugt auf dem die Öffnung umgebenden Rand der Behälterwand angebracht, so dass das Dichtelement zwischen dem Deckel und der Behälterwand, bei aufgebrachtem Deckel, abdichtet.

Bevorzugt liegt das Dichtelement im Wesentlichen radial innerhalb des Versteifungsrings, also zumindest abschnittsweise näher zur Öffnung als der Versteifungsring.

Besonders bevorzugt weist der Versteifungsring zumindest eine Abstützung für einen Zuganker oder Druckanker auf. Ankerelemente, die zur Erhöhung der Festigkeit des Behälters zwischen den Behälterwänden eingerichtet sind, können sich also am Versteifungsring abstützen.

### Kurzbeschreibung der Zeichnungen

Die Erfindung wird im Folgenden beispielhaft unter Bezugnahme auf die Zeichnungen beschrieben.
- Fig. 1: ist eine Schnittansicht eines erfindungsgemäßen Kunststofftanks im Bereich der Öffnung.
- Fig. 2: ist eine weitere Schnittansicht eines erfindungsgemäßen Kunststofftanks gemäß Fig. 1.
- Fig. 3: ist eine Schnittansicht eines weiteren erfindungsgemäßen Kunststofftanks im Bereich der Öffnung.
- Fig. 4: ist eine weitere Schnittansicht des weiteren Kunststofftanks gemäß Fig. 3.

### Detaillierte Beschreibung der Erfindung

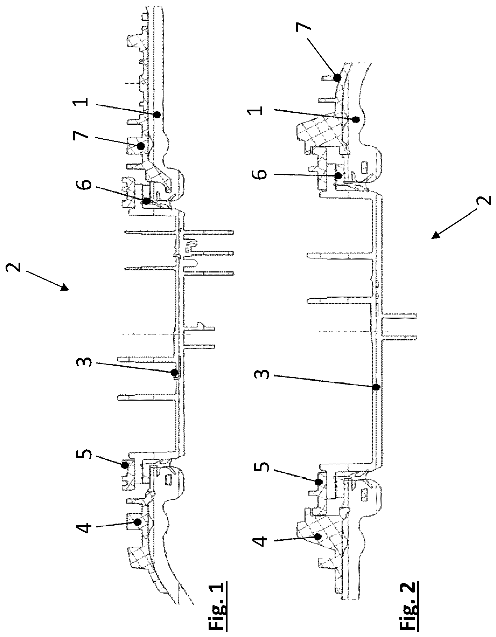

In den Fig. 1-2 ist ein erfindungsgemäßer Kunststofftank im Bereich einer Öffnung 2 des Tanks, insbesondere einer Serviceöffnung, und somit im Bereich eines Versteifungsrings 4, dargestellt.

Der Kunststofftank umfasst eine Behälterwand 1 aus Kunststoff, insbesondere aus einem thermoplastischen Kunststoff, wie HDPE (High Density Polyethylen). In der Behälterwand 1 ist eine Öffnung 2 angeordnet, die mit einem abnehmbaren Deckel 3 verschließbar ist.

In den die Öffnung 2 umgebenden Rand der Behälterwand 1, ist außen am Behälter ein Versteifungsring 4 in den Kunststoff der Behälterwand eingebettet. Der Versteifungsring 4 ist ein Kunststoff-Spritzgussbauteil. Der Deckel 3 ist beim Verschließen der Öffnung 2, mittelbar über einen Bajonettring 5, am Versteifungsring 4 abgestützt.

Der Versteifungsrings 4 wurde beim Formungsprozess der Behälterwand 1 umblasen oder umsaugt, so dass der Versteifungsring 4 vollumfänglich in den Kunststoff der Behälterwand 1 eingebettet ist.

Ein Bajonettring 5 zum Verschließen und Abnehmen des Deckels 3, ist vom Versteifungsring 4 gehalten. Der Bajonettring 5 ist dazu zumindest abschnittsweise vom Versteifungsring 4 außen hintergriffen und somit zum Behälter hin abgestützt oder belastet.

Ein umlaufendes Dichtelement 6, insbesondere eine flache Ringdichtung, ist auf dem, die Öffnung 2 umgebenden Rand der Behälterwand 1 außen angebracht, so dass das Dichtelement 6 zwischen dem Deckel 3 und der Behälterwand 1, bei aufgebrachtem Deckel 3, abdichtet.

Das Dichtelement 6 liegt im Wesentlichen radial innerhalb des Versteifungsrings 4 auf der Behälterwand 1 auf.

Der Versteifungsring 4 weist Versteifungsgeometrien 7 auf, insbesondere nach außen abstehende Versteifungsrippen.

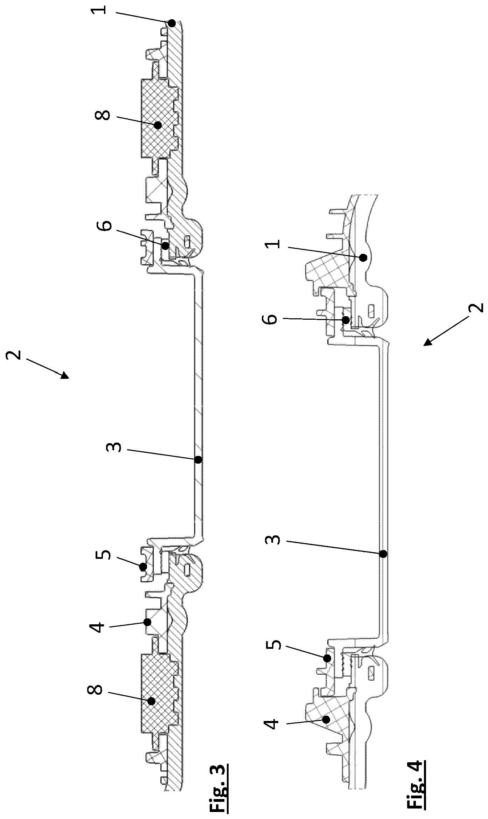

In den Fig. 3-4 ist ein alternativer erfindungsgemäßer Kunststofftank im Bereich einer Öffnung 2 des Tanks, insbesondere einer Serviceöffnung, und somit im Bereich eines Versteifungsrings 4, dargestellt.

Diese Ausführungsform unterscheidet sich von der Ausführung nach Fig. 1 - 2 dadurch, dass Abschnitte des Versteifungsrings 4 mittels Schweißpads 8 am Kunststoff der Behälterwand 1 befestigt sind. Die Schweißpads 8 sind im Kunststoff der Behälterwand 1 fixiert, insbesondere stoffschlüssig und bevorzugt auch formschlüssig, und der Versteifungsring 4 ist zwischen Flächen, die die Schweißpads 8 ausbilden und dem Kunststoff der Behälterwand 1 angeordnet, also geklemmt. Die Einbettung des Versteifungsrings 4 in den die Öffnung 2 umgebenden Rand der Behälterwand 1 erfolgt somit in erster Linie mittelbar über die Schweißpads 8. Eine zusätzliche direkte Einbettung des Versteifungsrings 4 in den die Öffnung 2 umgebenden Rand der Behälterwand 1 kann beispielsweise nur in geringem Ausmaß erfolgen, oder gar nicht.

### Bezugszeichenliste

- 1: Behälterwand
- 2: Öffnung
- 3: Deckel
- 4: Versteifungsring
- 5: Bajonettring
- 6: Dichtelement
- 7: Versteifungsgeometrie
- 8: Schweißpad

## Patentansprüche

1. Kunststofftank für ein Kraftfahrzeug, wobei der Kunststofftank eine Behälterwand (1) aus Kunststoff umfasst, wobei in der Behälterwand (1) eine Öffnung (2) angeordnet ist, wobei der Kunststofftank einen abnehmbaren Deckel (3) umfasst und die Öffnung (2) durch den Deckel (3) verschließbar und öffenbar ist, wobei in den die Öffnung (2) umgebenden Rand der Behälterwand (1) ein Versteifungsring (4) eingebettet ist, wobei der Versteifungsring (4) ein Kunststoff-Spritzgussbauteil ist, wobei der Deckel (3) beim Verschließen der Öffnung (2) unmittelbar oder mittelbar durch den Versteifungsring (4) abgestützt ist, **dadurch gekenn- zeichnet,** dass der Versteifungsring (4) Versteifungsgeometrien (7) aufweist, nämlich Versteifungswaben und/oder Versteifungsrippen, wobei ein Bajonettring (5) oder Gewindering, zum Verschließen und Abnehmen des Deckels (3), vom Versteifungsring (4) gehalten ist.

2. Kunststofftank nach Anspruch 1,
**dadurch gekennzeichnet, dass** der Versteifungsring (4) außen am Rand der Öffnung (2) in die Behälterwand (1) eingebettet ist.

3. Kunststofftank nach zumindest einem der vorhergehenden Ansprüche,
**dadurch gekennzeichnet, dass** zumindest ein Abschnitt des Versteifungsrings (4) beim Formungsprozess der Behälterwand (1) umblasen oder umsaugt wird, so dass der Versteifungsring (4) in den Kunststoff der Behälterwand (1) eingebettet wird, bevorzugt der ganze Umfang des Versteifungsrings (4).

4. Kunststofftank nach zumindest einem der vorhergehenden Ansprüche,
**dadurch gekennzeichnet, dass** zumindest ein Abschnitt des Versteifungsrings (4) mittels eines Schweißpads (8) am Kunststoff der Behälterwand (1) befestigt ist, wobei bevorzugt das Schweißpad (8) im Kunststoff der Behälterwand (1) fixiert ist und besonders bevorzugt der Versteifungsring (4) zwischen einer Fläche des Schweißpads (8) und dem Kunststoff der Behälterwand (1) geklemmt ist.

5. Kunststofftank nach zumindest einem der vorhergehenden Ansprüche,
**dadurch gekennzeichnet, dass** ein umlaufendes Dichtelement (6), insbesondere eine Ringdichtung, auf dem, die Öffnung (2) umgebenden Rand der Behälterwand (1) angebracht ist, so dass das Dichtelement (6) zwischen dem Deckel (3) und der Behälterwand (1) bei aufgebrachtem Deckel (3) abdichtet.

6. Kunststofftank nach Anspruch 5,
**dadurch gekennzeichnet, dass** das Dichtelement (6) radial innerhalb des Versteifungsrings (4) liegt.

7. Kunststofftank nach zumindest einem der vorhergehenden Ansprüche,
**dadurch gekennzeichnet, dass** der Versteifungsring (4) zumindest eine Abstützung für einen Zug- oder Druckanker aufweist.

## Claims

1. Plastic tank for a motor vehicle, wherein the plastic tank comprises a container wall (1) composed of plastic, wherein an opening (2) is arranged in the container wall (1), wherein the plastic tank comprises a removable cover (3) and the cover (3) can be used to close and open the opening (2),
wherein a stiffening ring (4) is embedded into the edge of the container wall (1), said edge surrounding the opening (2), wherein the stiffening ring (4) is a plastics injection-moulded component, wherein the cover (3) is supported directly or indirectly by the stiffening ring (4) when the opening (2) is being closed **characterized in that** the stiffening ring (4) has stiffening geometries (7), namely stiffening honeycomb-like structures and/or stiffening ribs, wherein a bayonet ring (5) or threaded ring for the closing and removal of the cover (3) is retained by the stiffening ring (4).

2. Plastic tank according to Claim 1,
**characterized in that** the stiffening ring (4) is embedded into the container wall (1) on the outside at the edge of the opening (2).

3. Plastic tank according to at least one of the preceding claims, **characterized in that** at least a portion of the stiffening ring (4) is encapsulated by blow moulding or encapsulated by suction during the forming process of the container wall (1), such that the stiffening ring (4) is embedded into the plastic of the container wall (1), preferably the entire circumference of the stiffening ring (4).

4. Plastic tank according to at least one of the preceding claims, **characterized in that** at least a portion of the stiffening ring (4) is fastened to the plastic of the container wall (1) by means of a welding pad (8), wherein preferably the welding pad (8) is fixed in the plastic of the container wall (1), and particularly preferably the stiffening ring (4) is clamped between a surface of the welding pad (8) and the plastic of the container wall (1).

5. Plastic tank according to at least one of the preceding claims, **characterized in that** a circumferential sealing element (6), in particular a ring seal, is mounted on the edge of the container wall (1), said edge surrounding the opening (2), such that the sealing element (6) seals between the cover (3) and the container wall (1) when the cover (3) is attached.

6. Plastic tank according to Claim 5,
**characterized in that** the sealing element (6) lies radially within the stiffening ring (4).

7. Plastic tank according to at least one of the preceding claims, **characterized in that** the stiffening ring (4) has at least one support for a tension or pressure anchor.

## Revendications

1. Réservoir en matière synthétique destiné à un véhicule automobile, le réservoir en matière synthétique comprenant une paroi de récipient (1) en matière synthétique, une ouverture (2) étant ménagée dans la paroi de récipient (1), le réservoir en matière synthétique comprenant un couvercle amovible (3) et l'ouverture (2) pouvant être fermée et ouverte par le couvercle (3), un anneau de rigidification (4) étant incorporé dans le bord de la paroi du récipient (1) qui entoure l'ouverture (2), l'anneau de rigidification (4) étant un composant en matière synthétique moulé par injection, le couvercle (3) étant supporté directement ou indirectement par l'anneau de rigidification (4) lorsque l'ouverture (2) est fermée, **caractérisé en ce que** l'anneau de rigidification (4) présente des géométries de rigidification (7), à savoir des nids d'abeilles de rigidification et/ou des nervures de rigidification, un anneau à baïonnette (5) ou un anneau fileté étant maintenu par l'anneau de rigidification (4) afin de fermer et retirer le couvercle (3).

2. Réservoir en matière synthétique selon la revendication 1, **caractérisé en ce que** l'anneau de rigidification (4) est incorporé dans la paroi de récipient (1) à l'extérieur sur le bord de l'ouverture (2).

3. Réservoir en matière synthétique selon l'une au moins des revendications précédentes, **caractérisé en ce qu'**au moins une portion de l'anneau de rigidification (4) est soufflée ou aspirée pendant le processus de formage de la paroi de récipient (1) de sorte que l'anneau de rigidification (4) soit incorporé dans la matière synthétique de la paroi de récipient (1), de préférence sur toute la circonférence de l'anneau de rigidification (4).

4. Réservoir en matière synthétique selon l'une au moins des revendications précédentes, **caractérisé en ce qu'**au moins une portion de l'anneau de rigidification (4) est fixée à la matière synthétique de la paroi de récipient (1) au moyen d'une pastille de soudage (8), de préférence la pastille de soudage (8) étant fixée dans la matière synthétique de la paroi de récipient (1) et de manière particulièrement préférée l'anneau de rigidification (4) étant serré entre une surface de la pastille de soudage (8) et la matière synthétique de la paroi de récipient (1).

5. Réservoir en matière synthétique selon l'une au moins des revendications précédentes, **caractérisé en ce qu'**un élément d'étanchéité circonférentiel (6), notamment une garniture d'étanchéité annulaire, est fixé sur le bord de la paroi de récipient (1) qui entoure l'ouverture (2) de sorte que l'élément d'étanchéité (6) réalise l'étanchéité entre le couvercle (3) et la paroi de récipient (1) lorsque le couvercle (3) est appliqué.

6. Réservoir en matière synthétique selon la revendication 5, **caractérisé en ce que** l'élément d'étanchéité (6) est situé radialement à l'intérieur de l'anneau de rigidification (4).

7. Réservoir en matière synthétique selon l'une au moins des revendications précédentes, **caractérisé en ce que** l'anneau de rigidification (4) comporte au moins un appui destiné à un moyen d'ancrage fonctionnant en traction ou en compression.
